(19) Europäisches Patentamt
European Patent Office
Office européen des brevets

(11) EP 1 249 845 B1

(12) **EUROPEAN PATENT SPECIFICATION**

(45) Date of publication and mention of the grant of the patent:
**11.07.2012 Bulletin 2012/28**

(51) Int Cl.:
***H01B 3/44*** *(2006.01)*

(21) Application number: **02405275.5**

(22) Date of filing: **08.04.2002**

# (54) Stabilized medium and high voltage cable insulation composition

Stabilisierte Zusammensetzung einer Isolierung für Mittel- und Hochspannungskabel

Composition stabilisée de l'isolation d'un câble à moyenne ou haute tension

(84) Designated Contracting States:
**AT BE CH CY DE DK ES FI FR GB GR IE IT LI LU MC NL PT SE TR**

(30) Priority: **10.04.2001 EP 01810356**
**23.05.2001 EP 01810511**

(43) Date of publication of application:
**16.10.2002 Bulletin 2002/42**

(73) Proprietor: **BASF SE**
**67056 Ludwigshafen (DE)**

(72) Inventors:
- **Voigt, Wolfgang**
  **79541 Lörrach (DE)**
- **Kenny, John**
  **4153 Reinach (CH)**

(56) References cited:
**EP-A- 0 966 000** **EP-A- 1 036 804**
**WO-A-95/25767**

- **DATABASE CAPLUS [Online] CHEMICAL ABSTRACTS SERVICE, COLUMBUS, OHIO, US; SEKIGUCHI, YOICHI ET AL: "Electrically insulating polyolefin compositions and durable electric wires, cables, and connectors therefrom" retrieved from STN Database accession no. 133: 336221 XP002204973 & JP 2000 306433 A (SUMITOMO ELECTRIC INDUSTRIES, LTD., JAPAN) 2 November 2000 (2000-11-02)**
- **WEAST R C: "CRC Handbook of Chemistry and Physics 64th Edition" 1984 , CRC PRESS, INC. , BOCA RATON, FLORIDA XP002204972 * page C-295, compound no. 6870: Ethylene, 1,1-diphenyl ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 249 845 B1

## Description

The invention relates to a polyethylene composition for use as insulation for wire and cable that has improved scorch resistance. The stabilized composition is suitable for use as cable insulation of medium and high voltage power cables.

Insulation compositions generally include a polyethylene, a peroxide crosslinking agent and a stabilizer. Polymers containing peroxides are vulnerable to scorch, i.e. to premature crosslinking occurring during the extrusion process.

There are several key factors which must be considered when making the choice of an appropriate stabilizing system. These factors include the crosslinking speed and the degree of crosslinking, resistance to scorch at extrusion temperatures, efficient retention of mechanical properties before and after high temperature aging, no exudation to the polymer surface and a high degree of cleanliness.

US Patent 6,191,230 described a polyethylene composition containing as scorch inhibitor a substituted hydroquinone, 4,4'-thiobis(2-methyl-6 -tert.-butylphenol); 4,4'-thiobis(2 -tert.-butyl-5-methylphenol); or mixtures thereof.

In order to remove electroconductive impurities the European Patent Application EP-A-613154 describes a process to prepare a polyethylene composition whereby the crosslinking agent and/or the stabilizer are blended into a low density polyethylene after being subjected to a purification process.

JP-A-2000/306433 discloses crosslinkable polyethylene compositions. Inventive examples 3 and 13 disclose a composition, which contains 100 parts low density polyethylene, 0.2 parts 2,4-bis(n-octylthiomethyl)-6-methylphenol, 2.0 parts dicumyl peroxide, 0.2 parts 4,4'-thiobis-(6-t-butyl-3-methylphenol) and 0,2 parts poly[(8-(1,1,3,3-tetramethylbutyl)amino-1,3,5-triazine-2,4-diyl) ((2,2,6,6-tetramethyl-4-piperidinyl)imino)hexamethylene(2,2,6,6-tiptramethyl-4-piperidyl)imino)}]. Inventive example 4 discloses a composition, which contains 100 parts low density polyethylene, 0.2 parts 2,4-bis(n-octylthiomethyl)-6-methylphenol, 2.0 parts dicumyl peroxide, 0.2 parts 4,4'-thiobis-(6-t-butyl-3-methylphenol) and 0.2 parts N,N'-bis(3-aminopropyl)ethylenediamine 2,4-bis[N-butyl-N-(1,2,2,6,6-pentamethyl-4-piperidinyl) amino]-6-methyl-1,3,5-triazine condensate. Inventive example 7 discloses a composition, which contains 100 parts low density polyethylene, 0,1 parts 2,4-bis(n-octylthiomethyl)-6-methylphenol, 2.0 parts dicumyl peroxide, 0.2 parts 4,4'-thiobis-(6-t-butyl-3-methylphenol) and 0,2 parts N,N'-bis(3-aminopropyl)ethylenediamine 2,4-bis[N-butyl-N-(1,2,2,6,6-pentamethyl-4-piperidinyl)amino]-6-methyl-1,3,5-triazine condensate. Inventive example 8 discloses a composition, which contains 100 parts low density polyethylene0.3 parts 2,4-bis(n-octylthiomethyl)-6-methylphenol, 2.0 parts dicumyl peroxide, 0,2 parts 4,4'-thiobis(6-t-butyl-3-methylphenol) and 0.2 parts N,N'-bis(3-aminopropyl)ethylenediamine 2,4-bis [N-butyl-N-(1,2,2,6,6,pentamethyl-4-piperidinyl)amino]-6-methyl-1,3,5-triazine condensate. Comparable example 3 discloses a composition, which contains 100 parts low density polyethylene, 0.2 parts 2,4-bis(n-octylthiomethyl)-6-methylphenol, 2.0 parts dicumyl peroxide and 0.2 parts 4,4'-thiobis(6-t-butyl-3-methylphenol).

Cleanliness is a critical parameter and there is still a need to provide clean insulating material containing polyethylene crosslinkable compositions which can be extruded with a minimum of premature crosslinking and yet showing a sufficient crosslinking speed.

It has now been found that an improved insulation material can be obtained by using a liquid stabilizing system.

Thus, the invention relates to a polyethylene composition having improved scorch resistance consisting essentially of

(a) a polyethylene,
(b) a scorch inhibitor having a melting point below 50 °C at atmospheric pressure and is a compound of the formula I

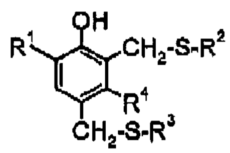

(I)

wherein
$R^1$ is $C_{1-2}$alkyl or $C_{1-20}$alkyl which is substituted by phenyl, $C_{2-20}$alkenyl, $C_{3-20}$alkinyl, $C_{6-9}$cycloalkyl, phenyl or tolyl;
$R^2$ and $R^3$ each independently of the other are; $C_{1-20}$alkyl or $C_{1-20}$alkyl which is substituted by the following radicals: phenyl, one or two hydroxyl, cyano, formyl, acetyl, -O-COR$^5$; $R^5$ is $C_{1-20}$alkyl; $C_{2-20}$alkenyl; $C_{3-20}$alkinyl; $C_{5-7}$cycloalkyl or $C_{6-7}$cycloalkyl which is substituted by hydroxyl; phenyl, 4-chlorophenyl, 2-methoxycarbonylphenyl, p-tolyl, 1,3-benzthiazol-2-yl, or -(CHR$^8$)$_n$COOR$^7$ or-(CHR$^8$)$_n$CONR$^8$R$^9$ with n is 1 or 2,
$R^6$ is hydrogen or $C_{1-6}$alkyl,
$R^7$ is $C_{1-20}$alkyl, $C_{1-20}$alkyl which is interrupted by one to five O or S, $C_{5-7}$cyoloalkyl, phenyl, benzyl, tolyl,

$R^6$ and $R^8$ are hydrogen or $C_{1-6}$alkyl:
$R^4$ is hydrogen or methyl: and
(c) an organic peroxide; which composition can be extruded with a minimum of premature crosslinking yet possess a sufficient crosslinking speed.

Scorch inhibitors having a melting point below 50 °C at atmospheric pressure are e.g. phenols as described in US 4,759, 862 and US 4,867,572.

Referring to US 4,759, 862 and US 4,857,572 the scorch inhibitor is a compound of formula

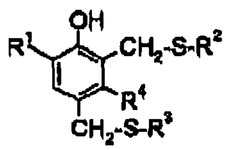

I

wherein

| | |
|---|---|
| $R^1$ | is $C_{1-20}$alkyl or $C_{1-20}$alkyl which is substituted by phenyl, $C_{2-2}$alkenyl, $C_{3-20}$alkinyl, $C_{6-8}$cycloalkyl, phenyl or tolyl; |
| $R^2$ and $R^3$ | each independently of the other are:<br>$C_{1-20}$alkyl or $C_{1-20}$alkyl which is substituted by the following radicals: phenyl, one or two hydroxyl, cyano, formyl, acetyl, -O-$COR^5$; $R^5$ is $C_{1-20}$alkyl;<br>$C_{2-20}$alkenyl or $C_{3-20}$alkinyl;<br>$C_{5-7}$cycloalkyl or $C_{5-7}$cycloalkyl which is substituted by hydroxyl; phenyl, 4-chlorophenyl, 2-methoxycarbonylphenyl, p-tolyl, 1,3-benzthiazol-2-yl, or<br>$-(CHR^8)_nCOOR^7$ or $-(CHR^8)_nCONR^8R^9$ with<br>n is 1 or 2,<br>$R^6$ is hydrogen or $C_{1-8}$alkyl,<br>$R^7$ is $C_{1-20}$alkyl, $C_{1-20}$alkyl which is interrupted by one to five O or S, $C_{5-7}$cycloalkyl, phenyl, benzyl, tolyl,<br>$R^8$ and $R^9$ are hydrogen or $C_{1-6}$alkyl; |
| $R^4$ | is hydrogen or methyl. |

$C_{1-20}$alkyl radicals are, for example, methyl, ethyl, n-propyl, isopropyl, n-butyl, sec.-butyl, tert.-butyl, n-pentyl, isopentyl, n-hexyl, n-heptyl, 1,1-dimethylbutyl, n-octyl, 2-ethylhexyl, isooctyl (isomeric mixture of primary octyl), n-nonyl, tert.-nonyl (isomeric mixture), n-decyl, 1,1,3,3-tetramethylbutyl (t-octyl), n-dodecyl, tert.-dodecyl (mixture containing as main component 1,1,3,3,5,5-hexamethylhexyl and 1,1,4,6,6-pentamethylhept-4-yl), n-tetradecyl, n-hexadecyl, n-octadecyl or n-eicosyl.

$C_{2-20}$alkenyl radicals are, for example, vinyl, allyl (prop-2-enyl), but-3-enyl, pent-4-enyl, hex-5-enyl, oct-7-enyl, dec-9-enyl or dodec-11-enyl. Allyl is preferred.

$C_{3-20}$alkinyl radicals are, for example, propargyl, but-3-inyl, hex-5-inyl, oct-7-inyl, dec-9-inyl, dodec-11-inyl, tetradec-13-inyl, hexadec-15-inyl, octadec-17-inyl or eicos-19-inyl. Propargyl is preferred.

$C_{5-9}$cycloalkyl radicals are, for example, cyclopentyl, cyclohexyl, cycloheptyl, cyclooctyl, cyclononyl, and in particular cyclohexyl.

$C_{1-20a}$lkyl radicals substituted by phenyl are, for example, benzyl, phenethyl, α-methylbenzyl, α,α-dimethylbenzyl, phenylbutyl, phenyl-α,α-dimethylpropyl, phenylhexyl, phenyl-α,α-dimethylbutyl, phenyloctyl or phenyl-α,α-dimethylhexyl. Benzyl, α-methylbenzyl and α,α-dimethylbenzyl are preferred.

$C_{1-20}$alkyl radicals substituted by one or two hydroxyl groups are, for example, 2-hydroxyethyl, 2-hydroxypropyl, 2-hydroxybutyl, 2-hydroxyhexyl, 2-hydroxyoctyl, 2-hydroxydecyl, 2-hydroxydodecyl, 2-hydroxytetradecyl, 2-hydroxyhexadecyl, 2-hydroxyoctadecyl, 2-hydroxy-eicosyl or 2,3-dihydroxypropyl.
Preferred is 2.hydroxyethyl, 2-hydroxypropyl and 2,3-dihydroxypropyl.

$C_{1-20}$alkyl radicals substituted by phenyl and hydroxy are, for ex. 1-phenyl-2-hydroxyethyl.

$C_{1-20}$alkyl radicals substituted by cyano are, for example, 2-cyanoethyl.

$C_{1-20}$alkyl interrupted by one to five O or S are, for example, 3-oxapropyl, 3-thiapropyl, 3-oxabutyl, 3-thiabutyl, 3-oxapentyl, 3-thiapentyl, 3,6-dioxaheptyl, 3,6,9-trioxadecyl or 3,6,9,12,15,18 hexaoxanonadecyl.

The group R' is preferably $C_{1-20}$alkyl, more preferably methyl or tert.-butyl, most preferably methyl and the groups $R^2$ and $R^3$ are preferably identical and are $C_{1-20}$alkyl or $C_{1-20}$alkyl substituted by one or two hydroxyl, preferably $C_{8-14}$alkyl, and in particular n-octyl, tert.-nonyl, n-dodecyl or tert.-dodecyl, 2-hydroxyethyl or 2,3-dihydroxypropyl.

The substances listed below may be regarded as examples of representatives of compounds of the formula I:

a) Compounds of formula I with
$R^1$ =alkyl (methyl, tert.-butyl, isopropyl, 2-ethylhexyl, 1,1-dimethylpropyl or 1,1-dimethylbutyl)

2,4-bis(2'-hydroxyethylthiomethyl)-6-methylphenol,
2,4-bis(2',3'-dihydroxypropylthiomethyl)-3,6,dimethylphenol,
2,4-bis(2'-acetyloxyethylthiomethyl)-3,6-dimethylphenol,
2,4-bis(2'-n-decanoyloxyethylthiomethyl)-6-methylphenol,
2,4-bis(n-octylthiometryl)-6-methylphenol,
2,4-bis(n-dodecylthiomethyl)-6-methylphenol,
2,4-bis(tert.-dodecylthiomethyl)-6-methylphenol,
2,4-bis(benzylthiomethyl)-6,methylphenol,
2,4-bis(2'-ethylhexyloxycarbonylmethylthiomethyl)-6-methylphenol,
2,4-bis(n-octadecyloxycarbonylmethylthiomethyl)-3,6-dimethylphenol,

2,4-bis(methylthiomethyl)-6-tert.-butylphenol,
2,4-bis-(ethylthiomethyl)-6-tert.-butylphenol,
2,4-bis-(n-propylthiomethyl)-6-tert.-butylphenol,
2,4-bis-(n-butylthiomethyl)-6-tert-butylphenol,
2,4-bis-(n-hexylthiomethyl)+tert.-butylphenol,
2,4-bis-(n-octylthiomethyl)-6-tert.-butylphenol,
2,4-bis-(n-decylthiomethyl)-6-tert.-butyphenol,
2,4-bis-(n-dodecylthiomethyl)-6-tert.-butylphenol,
2,4-bis-(n-tetradecylthiomethyl)-6-tert.-butylphenol,
2,4-bis-(n-hexadecylthiomethyl)-6-tert.-butylphenol,
2,4-bis-(n-octadecylthiomethyl)-6-tert.-butylphenol,
2,4-bis-(n-eicosylthiomethyl)-6-tert.-butylphenol,
2,4-bis-(isopropylthiomethyl)-6-tert.-butylphenol,
2,4-bis-(sec.-butylthiomethyl)-6-tert.-butylphenol,
2,4-bis-(tert.-butylthiomethyl)-6-tert.-butylphenol,
2,4-bis-(2-ethylhexylthiomethyl)-6-tert.-butylphenol,
2,4-bis-(1,1,3,3-tetramethylbutylthiomethyl)-6-tert.-butylphenol,
2,4-bis-(1,1,3,3,5,5-hexamethylhexylthiomethyl)-6-tert-butylphenol,
2,4-bis-[4-(2,2,4,6,6-pentamethylheptyl)-thiomethyl]-6-tert.-butylphenol,
2,4-bis-(prop-2-enylthiomethyl)-6-tert.-butylphenol,
2,4-bis-(prop-2-inylthiomethyl)-6-tert.-butylphenol,
2,4-bis-(cyclohexylthiomethyl)-6-tert.-butylphenol,
2,4-bis-(2-hydroxycyclohexylthiomethyl)-6-tert.-butylphenol,
2,4-bis-(phenylthiomethyl)-6-tert.-butylphenol,
2,4-bis(phenylthiomethyl)-3-methyl-6-tert.-butylphenol,
2,4-bis-(benzylthiomethyl)-6-tert.-butylphenol,
2,4-bie-(p-tolylthiomethyl)-6-tert.-butylphenol,
2,4-bis[2'-(2''-ethylhexyloxycarbonyl)ethylthiomethyl]-3-methyl-6-tert.-butyl phenol,

the dimethyl ester of 2,4-bis-(3-carboxy-2-thiapropyl)-6-tert.-butylphenol,
the dibutyl ester of 2,4-bis-(3-carboxy-2-thiapropyl)-6-tert.-butylphenol,
the dioctyl ester of 2,4-bis-(3-carboxy-2-thiapropyl)-6-tert.-butylphenol,
the didodecyl ester of 2,4-bis-(3-carboxy-2-thiapropyl)-6-tert.-butylphenol,
the monomethyl ester of 2,4-bis-(3-carboxy-2-thiapropyl)-6-tert.-butylphenol,
the dimethyl ester of 2,4-bis-(4 -carboxy-2-thiabutyl)-6-tert.-butylphenol,
the dioctyl ester of 2,4-bis-(4-carboxy-2-thiabutyl)-6-tert.-butylphenol,
the di-(2-ethylhexyl) ester of 2,4-bis-(3-carboxy-2-thiapropyl)-6-tert.-butylphenol,
the dimethyl ester of 2,4-bis-(3-carboxy-2-thiabutyl)-6-tert.-butylphenol,
the dimethyl ester of 2,4-bis-(4-carboxy-3-methyl-2-thiapentyl)-6-tert.-butylphenol
the N,N-dimethylamide of 2,4-bis-(3-carboxy-2-thiapropyl)-6-tert.-butylphenol
the N,N-dihexylamide of 2,4-bis-(3-carboxy-2-thiapropyl)-6-tert-butylphenol,
the N,N-didodecylamide of 2,4-bis-(3-carboxy-2-thiapropyl)-6-tert.-butylphenol,

the N,N-dimethylamide of 2,4-bis-(4-carboxy-2-thiabutyl)-6-tert.-butylphenol,
the N,N-dimethylamide of 2,4-bis-[3-carboxy-2-thiabutyl]-6-tert.-butylphenol,
the N,N-dibutylamide of 2,4-bis-(4-carboxy-3-methyl-2-thiapentyl)-6-tert.-butylphenol,
the dicyclohexyl ester of 2,4-bis-(3-carboxy-2-thiapropyl)-6-tert.-butylphenol,
the diphenyl ester of 2,4-bis-(3-carboxy-2-thiapropyl)-6-tert.-butylphenol,
the dibenzyl ester of 2,4-bis-(3-carboxy-2-thiapropyl)-6-tert.-butylphenol,
the di-p-tolyl ester of 2,4-bis-(3-carboxy-2-thiapropyl)-6-tert.-butylphenol,
the di-(3-thiabutyl) ester of 2,4-bis-(3-carboxy-2-thiapropyl)-6-tert.-butylphenol,
the di-(3-oxabutyl) ester of 2,4-bis-(3-carboxy-2-thiapropyl)-6-tert.-butylphenol,
the di-(N,N-dimethylamino-2-ethyl) ester of 2,4-bis-(3-carboxy-2-thiapropyl)-6-tert.-butylphenol,
the diamide of 2,4-bis-(3-carboxy-2-thiapropyl)-6-tert.-butylphenol,
the diamide of 2,4-bis-(4-carboxy-2-thiabutyl)-6-tert.-butylphenol, 2,4-bis-(prop-2-enylthiomethyl)-6-tert.-butylphenol,
2,4-bis-(prop-2-inylthiomethyl)-6-tert.-butylphenol,
2,4-bis-[2-hydroxyethylthiomethyl]-6-tert.-butylphenol,
2,4-bis-[2-cyanoethylthiomethyl]-6-tert.-butylphenol,
2,4-bis-[(4-methoxyphenyl)-thiomethyl]-6-tert.-butylphenol,
2,4-bis-[(4-chlorophenyl)-thiomethyl]-6-tert.-butylphenol,
2,4 -bis-[(2-methoxycarbonylphenyl)-thiomethyl]-6-tert.-butylphenol,
2,4-bis-[(1,3-benzthiazol-2-yl)-thiomethyl]-6-tert.-butylphenol,
2,4-bis-[2,3-dihydroxypropylthiomethyl]-6-tert.-butylphenol,
2,4-bis-[(3,5-di-tert.-butyl-4-hydroxyphenyl)thiomethyl]-6-tert.-butylphenol,
2,4-bis-[4-(3,5-di-tert.-butyl-4-hydroxyphenyl)-2-thiabutyl]-6-tert.-butyl phenol,
2,4-bis-[4-acetoxy-2-thiabutyl]-6-tert.-butylphenol,
2,4-bis-[3-formyl-2-thiabutyl]-6-tert.-butylphenol and
2,4-bis-[3-acetyl-2-thiabutyl]-6-tert.-butylphenol,

2,4-bis-(n-octylthiomethyl)-6-isopropylphenol,
2,4-bis-(n-dodecylthiomethyl)-6-isopropylphenol,

2,4-bis-(n-octylthiomethyl)-6-(2-ethylhexyl)-phenol,
2,4-bis-(n-dodecylthiomethyl)-6-(2-ethylhexyl)-phenol,

2,4-bis-(n-dodecylthiomethyl)-6-(1,1-dimethylpropyl-phenol,
2,4-bis-(n-octylthiomethyl)-6-(1,1-dimethylbutyl)-phenol,
2,4-bis-(n-dodecylthiomethyl)-6-(1,1-dimethylbutyl)-phenol,

b) compounds of formula I with $R^1$ = cycloalkyl (cyclonexyl)

2,4-bis-(n-octylthiomethyl)-6-cyclohexylphenol,
2,4-bis-(n-dodecylthiomethyl)-6-cyclohexylphenol.

c) compounds of formula 1 with $R^1$ = phenyl or tolyl

2,4-bis-(n-octylthiomethyl)-6-phenylphenol,
2,4-bis-(n-dodecylthiomethyl)-6-phenylphenol,
2,4-bis-(n-octylthiomethyl)-6-p-tolylphenol,
2,4-bis-(n-dodecylthiomethyl)-6-p-tolylphenol.

d) compounds of formula I with $R^1$ = alkyl substituted by phenyl (benzyl, α,α-dimethylbenzyl)

2,4-bis-(n-octylthiomethyl)-6-benzylphenol,
2,4-bis-(n-dodecylthiomethyl)-6-benzylphenol,
2,4-bis-(n-dodecylthiomethyl)-6-(α,α-dimethylbenzyl)-phenol,

e) compounds of formula I with $R^1$ = alkenyl (prop-2-enyl) or alkinyl (prop-2-inyl)

2,4-bis-(n-octylthiomethyl)-6-propr-2-enylphenol,

2,4-bis-(n-dodecylthiomethyl)-6-prop-2-enylphenol.
2,4-bis-(n-dodecylthiomethyl)-6-prop-2-inylphenol.

Especially suitable are those compounds of the formula I disclosed in US 4,857,572, wherein

| $R^1$ | $R^2$ and $R^3$ | $R^4$ | mp°C |
|---|---|---|---|
| methyl | n-octyl | hydrogen | < 20 |
| methyl | n-octyl | methyl | < 20 |
| methyl | n-dodecyl | hydrogen | 28 |
| methyl | n-dodecyl | methyl | 43 |
| t-butyl | n-dodecyl | methyl | 40 |
| methyl | benzyl | hydrogen | < 20 |
| methyl | $-CH_2COOR^7$ with $R^7$=2-ethylhexyl. | hydrogen | < 20 |
| methyl | $-CH_2CH_2OH$ | hydrogen | < 20 |
| methyl | $-C(CH_3)_2-CH_2-(CH_3)_2-CH_2-C(CH_3)_3$ | hydrogen | < 20 |
| methyl | $-C(CH_3)_2-CH_2-C(CH_3)_3$ | hydrogen | < 20 |

or compounds of the formula I disclosed in US 4,759,862, wherein

| $R^1$ | $R^2$ and $R^3$ | $R^4$ | mp °C |
|---|---|---|---|
| tert.-butyl | 2-ethylhexyl | hydrogen | < 20 |
| tert.-butyl | n-octyl | hydrogen | < 20 |
| tert.-butyl | n-dodecyl | hydrogen | < 20 |
| tert.-butyl | $-CH_2COOR^7$ with $R^7$=2-ethylhexyl. | hydrogen | < 20 |
| phenyl | $-CH_2COOR^7$ with $R^7$=2-ethylhexyl, | methyl | < 20 |
| tert.-butyl | tert.-$C_8H_{17-}$ | hydrogen | < 20 |
| tert.-butyl | tert.-$C_9H_{19}$- | hydrogen | < 20 |
| tert.-butyl | $-CH_2CH_2OH$ | hydrogen | < 20 |
| tert.-butyl | $-CH_2CH(OH)CH_2OH$ | hydrogen | < 20 |

The most preferred liquid scorch inhibitor of formula I is 2,4-bis(n-octylthiomethyl)-6-methylphenol and 2,4,bis (n-dodecylthiomethyl)-6-methylphenol.

Furthermore, the invention relates to a polyethylene composition having improved scorch resistance consisting essentially of

(a) a polyethylene,
(b) a scorch inhibitor having a melting point below 50 °C at atmospheric pressure and is a compound of the formula I

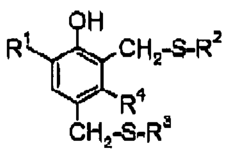

(I)

wherein
$R^1$ is $C_{1-20}$alkyl or $C_{1-20}$alkyl which is substituted by phenyl, $C_{2-20}$alkenyl, $C_{3-20}$alkinyl, $C_{5-9}$cycloalkyl, phenyl or tolyl:
$R^2$ and $R^3$ each independently of the other are: $C_{1-20}$alkyl or $C_{1-20}$alkyl which is substituted by the following radicals: phenyl, one or two hydroxyl, cyano, formyl, acetyl, $-O-COR^6$; $R^6$ is $C_{1-20}$alkyl: $C_{2-20}$alkenyl; $C_{3-20}$alkinyl; $C_{5-7}$cycloalkyl or $C_{5-7}$cycloalkyl which is substituted by hydroxyl, phenyl, 4-chlorophenyl, 2-methoxycarbonylphenyl, p-tolyl, 1,3-benzthiazol-2-yl, or $-(CHR^6)_nCOOR^7$ or $-(CHR^8)_nCONR^8R^9$ with n is 1 or 2,
$R^6$ is hydrogen or $C_{1-6}$alkyl,
$R^7$ is $C_{1-20}$alkyl, $C_{1-20}$alkyl which is interrupted by one to five O or S, $C_{5-7}$cycloalkyl, phenyl, benzyl, tolyl,
$R^8$ and $R^9$ are hydrogen or $C_{1-6}$alkyl;

$R^4$ is hydrogen or methyl; and

(c) an organic peroxide; and

(d) an amine selected from the group consisting of diphenylamine, 4-tert-butyldiphenylamine, 4-tert-octyldipenylamine, 4,4'di-tert-butyldiphenylamine, 2,4,4'-tris-tert-butyldiphenylamine, 4-tert-butyl-4'-tert-octyldiphenylamine, o,o'-, m,m'- or p,p'-di-tert-octyldiphenylamine, 2,4-di-tert-butyl-4'-tert-octyldiphenylamine, 4,4'-di-tert-octyldiphenylamine, 2,4-di-tert-octyl-4'-tert-butyldiphenylamine; which composition can be extruded with a minimum of premature crosslinking yet possess a sufficient crosslinking speed.

The amounts of the aromatic amines in the mixture are:

not more than 5% by weight of diphenylamine (a),
8-15% by weight of 4-tert.-dibutyl-diphenylamine (b),
24 to 32% by weight of compounds selected from group (c),

(c)(i) 4-tert.-octyldiphenylamine
(c)(ii) 4,4'-di-tert.-butyldiphenylamine
(c)(iii) 2,4,4'-tris-tert.-butyldiphenylamine

23 to 34% by weight of compounds selected from group (d),

(d)(i) 4-tert.-butyl-4'-tert.-octyldiphenylamine
(d)(ii) o,o'-, m,m'- or p,p'-di-tert.-octyldiphenylamine
(d)(iii) 2,4-di-tert.-butyl-4'-tert.-octyldiphenylamine; and

21 to 34% by weight of compounds selected from group (e)

(e)(i) 4,4'-di-tert.octyldiphenylamine
(e)(ii) 2,4-di-tert.-octyl-4'-tert,-butyldiphenylamine,

based in each case on the total amount of amines.

A preferred amine is 4,4'-di-tert.-octyldiphenylamine or Amine (A) which is a mixture of: 3wt% diphenylamine, 14wt% 4-tert.-butyldiphenylamine, 30wt% (4-tert.-octyldiphenylamine 4,4'-di-tert.-butyldiphenylamine and 2,4,4'-tris-tert.-butyldiphenylamine), 29wt% (4-tert.-butyl-4'-tert.-octyldiphenylamine, o,o', m,m' or p,p'-di-tert.-octyldiphenylamine and 2,4-di-tert.-butyl-4'-tert.-octyldiphenylamine), 18wt% 4,4'-di-tert.-octyldiphenylamine and 6wt% 2,4-di-tert.-octyl-4'-tert.-butyldiphenylamine.

The weight ratio of amine to Phenol is 4 to 5:1.

The compounds of the formulae I are prepared by processes which are known per se and described in US 4,759, 862 and US 4,857,572 (formula I).

Polyethylene, as that term is used herein, is a homopolymer of ethylene or a copolymer of ethylene and a minor proportion of one or more alpha-olefins having 3 to 12 carbon atoms, and preferably 4 to 8 carbon atoms, and, optionally, a diene, or a mixture or blend of such homopolymers and copolymers. The mixture can be a mechanical blend or an in situ blend. Examples of the alpha-olefins are propylene, 1-butene, 1-hexene, 4-methyl-1-pentena, and 1-octene. The polyethylene can also be a copolymer of ethylene and an unsaturated ester such as a vinyl ester, e.g., vinyl acetate or an acrylic or methacrylic acid ester.

Suitable polyethylenes are so-called high pressure polyethylenes. A variety of such polymers are commercially available. The high pressure polyethylenes are preferably homopolymers of ethylene having a density in the range of 0.910 to 0.930g/$cm^3$. The homopolymer can also have a melt index in the range of about 1 to about 5 g per 10 minutes, and preferably has a melt index in the range of about 0.75 to about 3 g per 10 minutes. Melt index Is determined under ASTM D-1238.

The crosslinking agent is an organic peroxide including dialkyl peroxides such as dicumyl peroxide, di -tert.-butyl peroxide, tert.-butyl cumyl peroxide, 2,5-dimethyl-2,5-di(t-butylperoxy)-hexane, 2,5-dimethyl-2,5-di(t-amylperoxy)-hexane, 2,5-dimethyl-2,5-di(t-butylperoxy) hexane-3, 2,5-dimethyl-2,5-di(t-amylperoxy)hexyne-3, $\alpha,\alpha$-di[(t-butylperoxy)-isopropyl]-benzene, di -tert.-amyl peroxide, 1,3,5-tri-[(t-butylperoxy)-isopropyl]benzene, 1,3-dimethyl-3-(t-butylperoxy)butanol, 1,3-dimethyl-3-(t-amylperoxy)butanol and mixtures thereof.

Other suitable organic peroxides are: succinic acid peroxide, benzoyl peroxide, tert.-butyl peroxy-2-ethyl hexanoate, p-chlorobenzoyl peroxide, tert.-butyl peroxy isobutylate, tert.-butyl peroxy isopropyl carbonate, tert.-butyl peroxy laurate, 2,5-dimethyl-2,5-di(benzoyl peroxy)-hexane, tert.-butyl peroxy acetate, di -tert.-butyl diperoxy phthalate, tert.-butyl peroxy maleic acid, cyclohexanone peroxide, tert.-butyl peroxy benzoate. Preferred are dialkylperoxides.

The organic peroxides have a decomposition temperature in the range of 100 to 200°C. Especially preferred is dicumyl peroxide, having a decomposition temperature of 150°C.

The organic peroxide and the scorch inhibitor are incorporated into the polyethylene by known methods, for example by melt blending in a roll mill, a kneading extruder or a mixer at a temperature lower than the decomposition temperature of the peroxide or by a soaking method whereby the liquid scorch Inhibitor/peroxide blend is mixed until the whole liquid phase is soaked into the polymer.

The scorch inhibitor and/or the peroxide can be added to the polyethylene either before or during processing.

The amount of the scorch inhibitor is in the range from 0.01 to 1wt%, preferably 0.1 to 0.5wt%.

The amount of the peroxide is in the range from 0.5 to 5 wt% preferably 1 to 3wt%.

Optionally epoxidized soya bean oil can be added in an amount 1 to 3wt%, preferably 2wt% to the polymer to stabilize the polymer against color degradation.

In a preferred embodiment the process is carried out in an extruder. The polyethylene or the polyethylene/peroxide blend is introduced into the extruder and the scorch inhibitor having a melting point below 50 °C or the scorch inhibitor and the peroxide is added, for example, through a side feed to said extruder, optionally after being filtered.

The extrudate is then crosslinked by exposing it to a temperature greater than the decomposition temperature of which the organic peroxide decomposes. The extrusion can be done around one or more electrical conductors to form a medium voltage or high voltage cable. The conductor is either a bare conductor or the conductor is surrounded by primary insulation and /or semicon layer. The cable is then exposed to crosslinking temperatures.

The crosslinking may be carried out in any conventional fashion such as in an oven or in a continuous vulcanization tube, optionally, but not necessarily under nitrogen atmosphere and increased pressure.

The stabilized composition is suitable for use as cable insulation of medium and high voltage power cables. A range for medium voltage is 1 kV to 40 kV. "High voltage" relates to a valve voltage exceeding about 40 kV, especially 40- 110kV.

Advantages of the invention is a surprisingly high resistance to scorch at extrusion temperature while maintaining a satisfactory crosslinking speed and crosslinking density. The mechanical properties before and after heat aging meet the industrial standard requirements.

The following examples illustrate the invention in detail.

<u>Compound preparation</u>

A low density polyethylene (d=0.923g/cm$^3$), type Escorene LD 100 MED from Exxon Mobil Chemical, is heated up to 90°C in a static oven. The stabilizer and the peroxide are heated up to 70°C by exposure to a water bath. The clear stabilizer/peroxide melt is added to the warm polymer granulate and kept in the oven for approximately 60min. Every ten minutes the mixture is quickly removed and thoroughly shaken. The procedure is repeated until the whole liquid phase was soaked into the polymer.

Examples of laboratory results:

<u>Scorch resistance</u>

In order to simulate cable extrusion conditions, 43 g of each compound are weighed and stir melted at 30 rpm in a lab kneader, type Brabender Plasticorder 814 300, at an initial mass temperature of 120°C. The material is kneaded under a constant load of 2.0 kg until the minimum torque is obtained and a subsequent remarkable increase in torque could be observed. The scorch time is determined as the period between minimum torque and an increase by 1Nm starting from the minimum torque. A longer scorch time means fewer problems occur due to premature crosslinking during extrusion. Tab. 1 shows the results.

<u>Crosslinking procedure</u>

The production of crosslinked PE-LD plaques (thickness: 1.5 mm) is carried out in three compression molders at different temperatures: In the first mold a defined weight of material is spread out in a frame and heated up to 120°C for six minutes. During that time the pressure is increased stepwise from 0 to 150 bar. In the next step the frame with the plaques is transferred to a second compression molder and left at 180°C for 15 min for completion of crosslinking. Finally, the plaques are cooled down from 180°C to room temperature within ten minutes.

<u>Crosslinking Speed in the Rheometer</u>

5g of each sample are heated up to 180°C in a Moving Die Rheometer (Monsanto MDR 2000). At test temperature the samples are exposed to a periodical alternating stress at constant amplitude (3° torsion at 1.66 Hz) until the

maximum torque is obtained. The criterion is the constant crosslinking speed, which is a measure of the interaction between crosslinking agent and antioxidant.

Tab.1

| Product | Loading | Scorch Time | Cure Efficiency Index | Maximum Torque |
|---|---|---|---|---|
| Comparative | 0,20 % | 7.2 min | 0.34 dNm | 2.8 dNm |
| Invention A | 0.20% | 11.1 min | 0.25 dNm | 2.6 dNm |
| Invention A | 0.25 % | 17.3 min | 0.26 dNm | 2.1 dNm |
| Invention A | 0.30 % | 19.1 min | 0.29 dNm | 2.0 dNm |
| B | 0.20 % | 9.4 min | 0.31 dNm | 3.1 dNm |
| B | 0.25% | 10.4 min | 0.26 dNm | 2.9 dNm |
| B | 0.30% | 13.1 min | 0.27 dNm | 2.7 dNm |
| Comparative = 4,4'-thiobis(2-methyl-6 -tert.-butylphenol)<br>Invention A = 2,4-bis(n-octylthiomethyl)-6-methylphenol<br>B = mixture of 80wt% 4,4'-di-tert.-octyldiphenylamine and 20wt% of Phenol P. | | | | |

Phenol P is a compound as depicted:

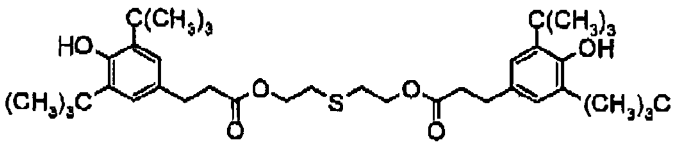

<u>Gel Content</u>

The amount of insolubles is generally a measure of the degree of crosslinking obtained. A defined weight of the crosslinked plaques is exposed to a solvent (toluene, xylene or decaline) at 90°C for 24h. The soluble parts are filtered through a sieve and both sieve and sample are washed with the corresponding solvent. Afterwards both are dried in a vacuum dryer until a constant weight is obtained.

The Gel content was determined according to the formula:

$$\text{Gel content (\%)} = 100\,(W_1 - W_2)/W_3$$

$W_1$ = Weight of Sieve and insolubles after vacuum drying
$W_2$ = Weight of the annealed, empty sieve before filtration
$W_3$ Weight of the polymer sample

All results (Table 2) are in the typical range expected for this kind of application.

Table 2

| Product | Loading | Gel content (Xylene) | Gel content (Decaline) |
|---|---|---|---|
| Comparative | 0.20% | 88.3% | 90.9 % |
| Invention A | 0.20% | 69.8 % | 91.7% |
| Invention A | 0.25 % | 88.5 % | 90.5 % |
| Invention A | 0.30% | 87.6 % | 89.6 % |
| B | 0.20 % | 91.0 % | 92.2 % |

(continued)

| Product | Loading | Gel content (Xylene) | Gel content (Decaline) |
|---|---|---|---|
| B | 0.25 % | 89.8 % | 91.1 % |
| B | 0.30% | 88.8 % | 90.7 % |
| Comparative = 4,4'-thiobis(2-methyl-6 -tert.-butylphenol)<br>invention A = 2,4-bis(n-octylthiomethyl)-6-methylphenol<br>B = mixture of 80wt% 4,4'-di-tert.-octyldiphenylamine and 20% of Phenol P | | | |

Thermal Aging and Mechanical Tests

Tensile bars (dimensions according to DIN 53-504-82) are punched from the crosslinked plaques and split into four sets for oven aging at 150°C for 0, 3, 10 and 14 days. The tensile bars are evaluated for retention of tensile strength and elongation (yield; break).
All results (Tables 3 and 4) are within the standard range of results expected for this application.

Table 3

| Product | Loading | Tensile Strength after crosslinking | Retained Tensile Strength after thermal aging at 150°C/10 days | Retained Tensile Strength after thermal aging at 150°C/14 days |
|---|---|---|---|---|
| Comparative | 0.20% | 21.7 MPa | 18.9 MPa | 17.5 MPa |
| Invention A | 0.20% | 20.5 MPa | 17.1 MPa | 17.6 MPa |
| Invention A | 0.25 % | 20.7 MPa | 18.1 MPa | 18.8 MPa |
| Invention A | 0.30 % | 21.9 MPa | 20.0 MPa | 18.9 MPa |
| B | 0.20% | 21.2 MPa | 17.6 MPa | 16.5 MPa |
| B | 0.25 % | 20,4 MPa | 18.0 MPa | 19.2 MPa |
| B | 0.30 % | 19.9 MPa | 18.2 MPa | 17.6 MPa |

Tab. 4

| Product | Loading | Elongation after crosslinking | Retained Elongation after thermal aging at 150°C /10 days | Retained Elongation after thermal aging at 150°C/14 days |
|---|---|---|---|---|
| Comparative | 0.20% | 478% | 486% | 479% |
| Invention A | 0.20% | 467% | 461% | 466% |
| Invention A | 0.25% | 465% | 474% | 485% |
| Invention A | 0.30% | 486% | 499% | 494% |
| B | 0.20% | 475% | 461% | 459% |
| B | 0.25% | 470% | 470% | 485% |
| B | 0.30% | 468% | 476% | 471% |
| Comparative = 4,4'-thiobis(2-methyl-6 -tert.-butylphenol)<br>Invention A = 2,4-bis(n-octylthiomethyl)-6-methylphenol<br>B= mixture of 80wt% 4,4'-di-tert.-octyldiphenylamine and 20% of Phenol P. | | | | |

Reduced Exudation of Stabilizers

It is examined how the liquid systems behave in comparison to the solid ones. A high tendency for migration of stabilizers to the polymer surface can cause various problems, such as loss of active radical scavengers and a sticky

surface lumping together the granules during storage. Exudation of stabilizers and peroxides is also known to have a negative impact on the extrusion process and the cable product and exudation dust may foul filters and cause slippage and instability in the extrusion process.

The example compares the sweat out or exudation behavior of the different systems after conditioning at 55°C. Invention A and B show an impressive improvement in terms of compatibility with the polymer. This offers a further opportunity for the converter to increase the additive loadings if appropriate, especially where higher scorch resistance is desired, without expecting severe problems with exudation.

Each formulation is kept in the oven at 55°C in order to simulate antioxidant plate out. At the appropriate recall interval, an aliquot is extracted from the oven and measured for surface exudation. The samples are washed with methylene chloride (about 15 seconds contact with polymer) and the solution is then transferred to a round bottom flask and evaporated to dryness. The resultant residue is reconstituted with a standard solution and analyzed quantitatively via liquid chromatography.

Table 5

| Product | Loading | Exudated Stabilizer in parts per million after 7 days |
|---|---|---|
| Comparative | 0.20% | 1430 |
| Invention A | 0.20% | 30 |
| Invention A | 0.25% | 40 |
| Invention A | 0.30% | 50 |
| B | 0.20% | 50 |
| B | 0.25% | 60 |
| B | 0.30% | 80 |
| Comparative = 4,4-thiobis(6-t-butyl-3-methylphenol)<br>Invention A = 2,4-bis(n-octylthiomethyl)-6-methylphenol<br>B = mixture of 80wt% 4,4'-di-tert.-octyldiphenylamine and 20% of Phenol P. | | |

A further preferred embodiment of the present invention relates to the use of the scorch inhibitor as described above to prevent blooming (sweat out or exudation) from the substrate.

## Claims

**1.** A polyethylene composition having improved scorch resistance consisting essentially of

(a) a polyethylene,

(b) a scorch inhibitor having a melting point below 50°C at atmospheric pressure and is a compound of the formula I

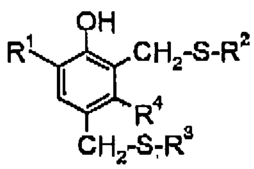

(I)

wherein

$R^1$ is $C_{1-20}$alkyl or $C_{1-20}$alkyl which is substituted by phenyl, $C_{2-20}$alkenyl, $C_{3-20}$alkinyl, $C_{5-8}$cycloalkyl, phenyl or tolyl;

$R^2$ and $R^3$each independently of the other are: $C_{1-20}$alkyl or $C_{1-20}$alkyl which is substituted by the following radicals: phenyl, one or two hydroxyl, cyano, formyl, acetyl, -O-COR$^5$; $R^5$ is $C_{1-20}$alkyl; $C_{2-20}$alkenyl; $C_{3-20}$alkinyl; $C_{6-7}$cycloalkyl or $C_{6-7}$cycloalkyl which is substituted by hydroxyl; phenyl, 4-chlorophenyl, 2-methoxycarbonylphenyl, p-tolyl, 1,3-benzthiazol-2-yl, or $-(CHR^6)_nCOOR^7$ or $-(CHR^6)_nCONR^6R^9$ with n is 1 or 2,

$R^6$ is hydrogen or $C_{1-6}$alkyl,
$R^7$ is $C_{1-20}$alkyl, $C_{1-20}$alkyl which is interrupted by one to five O or S, $C_{6-7}$cycloalkyl, phenyl, benzyl, tolyl,
$R^8$ and $R^9$are hydrogen or $C_{1-6}$alkyl;
$R^4$is hydrogen or methyl; and
(c) an organic peroxide; which composition can be extruded with a minimum of premature crosslinking yet possess a sufficient crosslinking speed.

**2.** A composition according to claim 1, wherein
$R^1$is $C_{1-20}$alkyl, and
$R^2$ and R3 are identical and are $C_{1-20}$alkyl or $C_{1-20}$alky substituted by one or two hydroxyl.

**3.** A composition according to claim 1, wherein the scorch inhibitor of formula I is 2,4-bis(n-octylthiomethyl)-6-methyl phenol or 2,4-bis(n-dodecylthiomethyl)-6-methylphenol.

**4.** A polyethylene composition having improved scorch resistance consisting essentially of

(a) a polyethylene,
(b) a scorch inhibitor having a melting point below 50 °C at atmospheric pressure and is a compound of the formula I

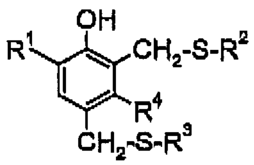

(I)

wherein
$R^1$ is $C_{1-20}$alkyl or $C_{1-20}$alkyl which is substituted by phenyl, $C_{2-20}$alkenyl, $C_{3-20}$alkinyl, $C_{6-9}$cycloalkyl, phenyl or tolyl;
$R^2$ and $R^3$ each Independently of the other are: $C_{1-20}$alkyl or $C_{1-20}$alkyl which is substituted by the following radicals: phenyl, one or two hydroxyl, cyano, formyl, acetyl, -O-COR$^5$; $R^5$ is $C_{1-20}$alkyl; $C_{2-20}$alkenyl; $C_{3-20}$alkinyl; $C_{5-7}$cycloalkyl or $C_{5-7}$cycloalkyl which is substituted by hydroxyl; phenyl, 4-chlorophenyl, 2-methoxycarbonylphenyl, p-tolyl, 1,3-benzthiazol-2-yl, or $-(CHR^8)_nCOOR^7$ or $-(CHR^8)_nCONR^8R^9$ with n Is 1 or 2,
$R^6$ is hydrogen or $C_{1-6}$alkyl,
$R^7$is $C_{1-20}$alkyl, $C_{1-20}$alkyl which is interrupted by one to five O or S, $C_{5-7}$cycloalkyl, phenyl, benzyl, tolyl,
$R^8$ and $R^9$ are hydrogen or $C_{1-6}$alkyl;
$R^4$is hydrogen or methyl; and
(c) an organic peroxide; and
(d) an amine selected from the group consisting of diphenylamine, 4-tert-butyldiphenylamine, 4-tert-octyldipenylamine, 4,4'-di-tert-butyldiphenylamine, 2,4,4'-tris-tert-butyldiphenylamine, 4-tert-butyl-4'-tert-octyldiphenylamine, o,o'-, m,m'- or p,p'-di-tert-octyldiphenylamine, 2,4-di-tert-butyl-4'-tert-octyldiphenylamine, 4,4'-di-tert-octyldiphenylamine, 2,4-di-tert-octyl-4'-tert-butyldiphenylamine; which composition can be extruded with a minimum of premature crosslinking yet possess a sufficient crosslinking speed.

**5.** A composition according to claim 4, wherein component (d) is 4,4'-di-tert-octyldiphenylamine or Amine (A) which is a mixture of: 3wt% diphenylamine, 14wt% 4-tert-butyldiphenylamine, 30wt% (4-tert-octyldiphenylamine 4,4',di-tert-butyldiphenylamine and 2,4,4'-tris-tert-butyldiphenylamine), 29wt% (4-tert.-butyl-4'-tert-octyldiphenylamine, o,o', m, m' or p,p'-di-tert.-octyldiphenylamine and 2,4-di-tert-butyl-4'-tert-octyldiphenylamine), 18wt% 4,4'-di-tert-octyldiphenylamine and 6wt% 2,4-di-tert-octyl-4'-tert-butyldiphenylamine.

**6.** A composition according to claim 1, wherein the amount of scorch inhibitor is in the range from 0.01 to 1wt% and the amount of the peroxide is in the range from 0.5 to 5 wt%.

**7.** A process for preparing a crosslinked polyethylene composition whereby the polyethylene or the polyethylene/ peroxide blend is introduced into an extruder and the scorch inhibitor according to claim 1 having a melting point

below 50 °C or the scorch inhibitor and the peroxide is added to said extruder and whereby the extrudate is then crosslinked by exposing it to a temperature greater than the decomposition temperature of which the organic peroxide decomposes.

**8.** The use of a composition according to claim 1 as cable insulation of medium and high voltage cables.

**9.** The use of a compound of the formula I according to component (b) of claim 1 as scorch inhibitor in polyethylene compositions containing an organic peroxide which composition can be extruded with a minimum of premature crosslinking yet possess a sufficient crosslinking speed.

**Patentansprüche**

**1.** Polyethylenzusammensetzung mit verbesserter Scorch-Beständigkeit, bestehend im Wesentlichen aus

(a) einem Polyethylen,
(b) einem Scorch-Inhibitor mit einem Schmelzpunkt unter 50°C bei atmosphärischem Druck, der eine Verbindung der Formel I ist

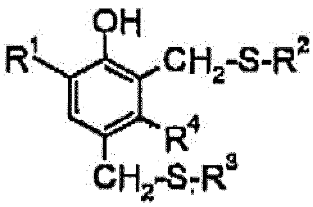

(I)

wobei

$R^1$ $C_{1-20}$-Alkyl oder $C_{1-20}$-Alkyl ist, das durch Phenyl, $C_{2-20}$-Alkenyl, $C_{3-20}$-Alkinyl, $C_{5-9}$- Cycloalkyl, Phenyl oder Tolyl substituiert ist;
$R^2$ und $R^3$ jeweils unabhängig vom anderen Folgende sind: $C_{1-20}$-Alkyl oder $C_{1-20}$-Alkyl, das durch die folgenden Radikale substituiert ist: Phenyl, ein oder zwei Hydroxylgruppen, Cyano, Formel, Acetyl, -O-$COR^5$; wobei $R^5$ $C_{1-20}$-Alkyl ist; $C_{2-20}$-Alkenyl oder $C_{3-20}$-Alkinyl; $C_{6-7}$-Cycloalkyl oder $C_{6-7}$-Cycloalkyl, das durch Hydroxyl substituiert ist; Phenyl, 4-Chlorphenyl, 2-Methoxycarbonylphenyl, p-Tolyl, 1,3-Benzthiazol-2-yl, oder $-(CHR^6)_nCOOR^7$ oder $-(CHR^6)_nCONR^8R^9$, wobei

n 1 oder 2 ist,
$R^6$ Wasserstoff oder $C_{1-6}$-Alkyl ist,
$R^7$ $C_{1-20}$-Alkyl, $C_{1-20}$-Alkyl, das durch ein bis fünf O oder S unterbrochen ist, $C_{6-7}$- Cycloalkyl, Phenyl, Benzoyl, Tolyl ist,
$R^8$ und $R^9$ Wasserstoff oder $C_{1-6}$-Alkyl sind;

$R^4$ Wasserstoff oder Methyl ist; und

(c) einem organischen Peroxid; wobei die zusammensetzung mit einem Minimum an vorzeitiger Vernetzung extrudiert werden kann, aber dennoch eine ausreichende Vernetzungsgeschwindigkeit besitzt.

**2.** Zusammensetzung nach Anspruch 1, wobei
$R^1$ $C_{1-20}$-Alkyl ist, und
$R^2$ und $R^3$ identisch und $C_{1-20}$-Alkyl oder $C_{1-20}$-Alkyl, substituiert durch ein oder zwei Hydroxylgruppen sind.

**3.** Zusammensetzung nach Anspruch 1, wobei der Scorch-Inhibitor von Formel 1 2,4-Bis(n-octylthiomethyl-6-methylphenol oder 2,4-Bis(n-dodecylthiomethyl)-6-methylphenol ist.

**4.** Polyethylenzusammensetzung mit verbesserter Scorch-Beständigkeit, bestehend im Wesentlichen aus

(a) einem Polymethylen,
(b) einem Scorch-Inhibitor mit einem Schmelzpunkt unter 50°C bei atmosphärischem Druck, der eine Verbindung der Formel I ist

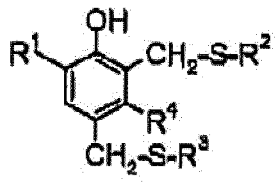

(I)

wobei

$R^1$ $C_{1-20}$-Alkyl oder $C_{1-20}$-Alkyl ist, das durch Phenyl, $C_{2-20}$-Alkenyl, $C_{3-20}$-Alkinyl, $C_{5-9}$- Cycloalkyl, Phenyl oder Tolyl substituiert ist;
$R^2$ und $R^3$ jeweils unabhängig vom anderen sind: $C_{1-20}$-Alkyl oder $C_{1-20}$-Alkyl, das durch die folgenden Radikale substituiert ist: Phenyl, ein oder zwei Hydroxylgruppen, Cyano, Formyl, Acetyl, -O-COR$^5$; wobei $R^5$ $C_{1-20}$-Alkyl ist; $C_{2-20}$-Alkenyl oder $C_{3-20}$-Alkinyl; $C_{5-7}$-Cycloalkyl oder $C_{5-7}$-Cycloalkyl, das durch Hydroxyl substituiert ist; Phenyl, 4-Chlorophenyl, 2-Methoxycarbonylphenyl, p-Tolyl, 1,3-Benzthiazol-2-yl, oder $-(CHR^6)_nCOOR^7$ oder $-(CHR^6)_nCONR^8R^9$, wobei

n 1 oder 2 ist, $R^6$ Wasserstoff oder $C_{1-6}$-Alkyl ist, $R^7$ $C_{1-20}$-Alkyl, $C_{1-20}$-Alkyl, das durch ein bis fünf O oder S unterbrochen ist, $C_{5-7}$- Cycloalkyl, Phenyl, Benzoyl, Tolyl ist, $R^8$ und $R^9$ Wasserstoff oder $C_{1-6}$-Alkyl sind;

$R^4$ Wasserstoff oder Methyl ist; und

(c) einem organische Peroxid; und
(d) einem Amin, ausgewählt aus der Gruppe bestehend aus Diphenylamin, 4-Tert.- butyldiphenylamin, 4-Tert.-octyldiphenylamin, 4,4-Di-tert.-Butyldiphenylamin, 2,4,4'-Tris- tert.-Butyldiphenylamin, 4-Tert.-butyl-4'-tert.-octyldiphenylamin, o,o'-, m,m'- oder p.p'-Di-tert.-octyldiphenylamin, 2,4-Di- tert.-butyl-4'-tert.-octyldiphenylamin, 4,4'- Di-tert.-octyldiphenylamin, 2,4-Di-tert.- octyl-4'-tert.-butyldiphenylamin; wobei die Zusammensetzung mit einem Minimum an vorzeitiger Vernetzung extrudiert werden kann, aber dennoch eine ausreichende Vernetzungsgeschwindigkeit besitzt.

**5.** Zusammensetzung nach Anspruch 4, wobei die Komponente (d) 4,4'-Di-tert.-octyldiphenylamin oder Amin (A) ist, das ein Gemisch ist aus: 3 Gew% Diphenylamin, 14 Gew% 4-tert.-Butyldiphenylamin, 30 Gew% (4-tert.-Octyldiphenylamin 4,4'-Di-tert.-butyldiphenylamin und 2,4,4'-Tris-tert.-Butyldiphenylamin), 29 Gew% (4-tert.-Butyl-4'-tert.-octyldiphenylamin, o,o'-, m,m'- oder p,p'-Di-tert.-octyldiphenylamin und 2,4-Di-tert.-butyl-4'-tert.-octyldiphenylamin), 18 Gew% 4,4'-Di-tert.-octyldiphenylamin und 6 Gew% 2,4-Di-tert.-octyl-4'-tert.-butyldiphenylamin.

**6.** Zusammensetzung nach Anspruch 1, wobei die Menge im Bereich von 0,01 bis 1 Gew% und die Menge des Peroxids im Bereich von 0,5 bis 5 Gew% liegt.

**7.** Verfahren zur Herstellung einer vernetzten Polyethylenzusammensetzung, wobei das Polyethylen oder die Polyethylen/Peroxidmischung in einen Extruder geleitet wird und der Scorch-Inhibitor nach Anspruch 1 mit einem Schmelzpunkt unter 50°C oder der Scorch-Inhibitor und das Peroxid dem Extruder zugegeben werden, und wobei das Extrudat dann bei einer Temperatur über der Zersetzungstemperatur, bei der sich das organische Peroxid zersetzt, vernetzt wird.

**8.** Verwendung einer zusammensetzung nach Anspruch 1 als Kabelisolierung für Kabel mittlerer und hoher Spannung.

**9.** Verwendung einer Verbindung nach Anspruch 1 gemäß Komponente (b) von Anspruch 1 als Scorch-Inhibitor in Polyethylenzusammensetzungen, die ein organisches Peroxid entfalten, wobei die Zusammensetzung mit einem Minimum an vorzeitigem Vernetzen extrudiert werden kann, aber dennoch eine ausreichende Vernetzungsgeschwindigkeit besitzt.

## Revendications

**1.** Composition de polyéthylène ayant une résistance au grillage améliorée constituée essentiellement de

(a) un polyéthylène,
(b) un inhibiteur de grillage ayant un point de fusion inférieur à 50 °C à pression atmosphérique et est un composé de formule I

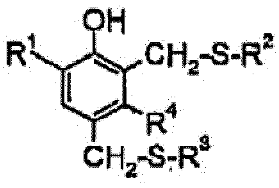

(I)

dans laquelle
$R^1$ est un alkyle en $C_{1-20}$ ou un alkyle en $C_{1-20}$ qui est substitué par phényle, alcényle en $C_{2-20}$, alcynyle en $C_{3-20}$, cycloalkyle en $C_{5-9}$, phényle ou tolyle ;
$R^2$ et $R^3$ chacun indépendamment l'un de l'autre sont : un alkyle en $C_{1-20}$ ou un alkyle en $C_{1-20}$ qui est substitué par les radicaux suivants : phényle, un ou deux hydroxyles, cyano, formule, acétyle, -O-$COR^5$; $R^5$ est un alkyle en $C_{1-20}$ ; un alcényle en $C_{2-20}$, un alcynyle en $C_{3-20}$, un cycloalkyle en $C_{5-7}$ ou un cycloalkyle en $C_{5-7}$ qui est substitué par hydroxyle ; phényle, 4-chlorophényle, 2-méthoxycarbonylphényle, p-tolyle, 1,3-benzothiazol-2-yle, ou $-(CHR^5)_nCOOR^7$ ou $-(CHR^6)_nCONR^8R^9$ avec n est 1 ou 2
$R^6$ est hydrogène ou alkyle en $C_{1-6}$ ;
$R^7$ est alkyle en $C_{1-20}$, alkyle en $C_{1-20}$ qui est interrompu par un à cinq O ou S, cycloalkyle en $C_{5-7}$, phényle, benzyle, tolyl,
$R^8$ et $R^9$ sont hydrogène ou alkyle en $C_{1-6}$ ;
$R^4$ est hydrogène ou méthyle ; et
(c) un peroxyde organique ; ladite composition peut être extrudée avec un minimum de réticulation prématurée tout en possédant une vitesse de réticulation suffisante.

**2.** Composition selon la revendication, dans laquelle
$R^1$ est un alkyle en $C_{1-20}$, et
$R^2$ et $R^3$ sont identiques et sont un alkyle en $C_{1-20}$ ou un alkyle en $C_{1-20}$ substitué par un ou deux hydroxyles.

**3.** Composition selon la revendication 1, dans laquelle l'inhibiteur de grillage de formule I est le 2,4-bis(n-octylthiométhyl)-6-méthylphénol ou le 2,4-bis(n-dodécylthiométhyl)-6-méthylphénol.

**4.** Composition de polyéthylène ayant une résistance au grillage améliorée constituée essentiellement de

(a) un polyéthylène,
(b) un inhibiteur de grillage ayant un point de fusion inférieur à 50 °C à pression atmosphérique et est un composé de formule I

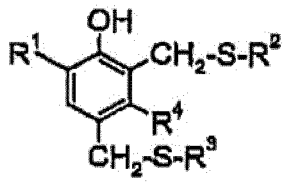

(I)

dans laquelle

$R^1$ est un alkyle en $C_{1-20}$ ou un alkyle en $C_{1-20}$ qui est substitué par phényle, alcényle en $C_{2-20}$, alcynyle en $C_{3-20}$, cycloalkyle en $C_{5-9}$, phényle ou tolyle ;

$R^2$ et $R^3$ chacun indépendamment l'un de l'autre sont : un alkyle en $C_{1-20}$ ou un alkyle en $C_{1-20}$ qui est substitué par les radicaux suivants : phényle, un ou deux hydroxyles, cyano, formule, acétyle, -O-$COR^5$ ; $R^5$ est un alkyle en $C_{1-20}$ ; un alcényle en $C_{2-20}$, un alcynyle en $C_{3-20}$, un cycloalkyle en $C_{5-7}$ ou un cycloalkyle en $C_{5-7}$ qui est substitué par hydroxyle ; phényle, 4-chlorophényle, 2-méthoxycarbonylphényle, p-tolyle, 1,3-benzothiazol-2-yle, ou $-(CHR^5)_nCOOR^7$ ou $-(CHR^6)_nCONR^8R^9$ avec n est 1 ou 2

$R^6$ est hydrogène ou alkyle en $C_{1-6}$ ;

$R^7$ est alkyle en $C_{1-20}$, alkyle en $C_{1-20}$ qui est interrompu par un à cinq O ou S, cycloalkyle en $C_{5-7}$, phényle, benzyle, tolyl,

$R^8$ et $R^9$ sont hydrogène ou alkyle en $C_{1-6}$ ;

$R^4$ est hydrogène ou méthyle ; et

(c) un peroxyde organique ; et

(d) une amine choisie dans le groupe constitué de diphénylamine, 4-tert-butyldiphénylamine, 4-tert-octyldiphénylamine, 4,4'-di-tert-butyldiphénylamine, 2,4,4'-tris-tert-butyldiphénylamine, 4-tert-butyl-4'-tert-octyldiphénylamine, o,o'-m,m'- ou p,p'-di-tert-octyldiphénylamine, 2,4-di-tert-butyl-4'-tert-octyldiphénylamine, 4,4'-di-tert-octyldiphénylamine, 2,4-di-tert-octyl-4'-tert-octyldiphénylamine ; ladite composition peut être extrudée avec un minimum de réticulation prématurée tout en possédant une vitesse de réticulation suffisante.

**5.** Composition selon la revendication 4, dans laquelle le composant (d) est la 4,4'-di-tert-octyldiphénylamine ou l'amine (A) qui est un mélange de : 3% en poids de diphénylamine, 14 % en poids de 4-tert-butyldiphénylamine, 30 % en poids de (4-tert-octyldiphénylamine, 4,4-di-tert-butyldiphénylamine et 2,4,4'-tris-tert-butyldiphénylamine), 29% en poids de (4-tert-butyl-4'-tert-octyldiphénylamine, o,o'-m,m'- ou p,p'-di-tert-octyldiphénylamine et 2,4-di-tert-butyl-4'-tert-octyldiphénylamine), 18 % en poids de 4,4'-di-tert-octyldiphénylamine et 6 % en poids de 2,4-di-tert-octyl-4'-tert-octyldiphénylamine.

**6.** Composition selon la revendication 1, dans laquelle la quantité d'inhibiteur de grillage est dans la plage de 0,01 à 1 % en poids et la quantité du peroxyde est dans la plage de 0,5 à 5% en poids.

**7.** Procédé pour préparer une composition de polyéthylène réticulée dans lequel le polyéthylène ou le mélange polyéthylène/peroxyde est introduit dans une extrudeuse et l'inhibiteur de grillage selon la revendication 1 ayant un point de fusion au-dessous de 50 °C ou l'inhibiteur de grillage et le peroxyde est ajouté à ladite extrudeuse et dans lequel l'extrudat est ensuite réticulé en l'exposant à une température supérieure à la température de décomposition à laquelle le peroxyde organique se décompose.

**8.** Utilisation d'une composition selon la revendication 1 en tant qu'isolation de câble de câbles moyenne et haute tension.

**9.** Utilisation d'un composé de formule I selon le composant (b) de la revendication 1 en tant qu'inhibiteur de grillage dans des compositions de polyéthylène contenant un peroxyde organique, ladite composition pouvant être extrudée avec un minimum de réticulation prématurée tout en possédant une vitesse de réticulation suffisante.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6191230 B
- EP 613154 A
- JP 2000306433 A
- US 4759862 A
- US 4867572 A
- US 4857572 A